Europäisches Patentamt

European Patent Office

Office européen des brevets

(11) Numéro de publication : **0 406 071 B1**

(12)

# FASCICULE DE BREVET EUROPEEN

(45) Date de publication du fascicule du brevet :
29.09.93 Bulletin 93/39

(51) Int. Cl.⁵ : **C01B 3/36**

(21) Numéro de dépôt : **90401768.8**

(22) Date de dépôt : **21.06.90**

(54) **Dispositif et procédé de fabrication de gaz de synthèse par combustion et son application.**

(30) Priorité : **27.06.89 FR 8908667**

(43) Date de publication de la demande :
**02.01.91 Bulletin 91/01**

(45) Mention de la délivrance du brevet :
**29.09.93 Bulletin 93/39**

(84) Etats contractants désignés :
**DE GB IT NL**

(56) Documents cités :
**EP-A- 0 272 986
GB-A- 969 528
GB-A- 1 387 516
US-A- 3 972 690**

(73) Titulaire : **INSTITUT FRANCAIS DU PETROLE
4, Avenue de Bois Préau
F-92502 Rueil-Malmaison (FR)**

(72) Inventeur : **Gateau, Paul
26 rue de la Fontaine des Veaux
F-78860 Saint Nom la Bretèche (FR)**
Inventeur : **Maute, Michel
18, rue des Nymphéas
F-78340 Les Clayes-sous-Bois (FR)**
Inventeur : **Feugier, Alain
3 ruelle du Moulle
F-78630 Morainvilliers-Orgeval (FR)**

EP 0 406 071 B1

Jouve, 18, rue Saint-Denis, 75001 PARIS

## Description

La présente invention concerne un procédé et un dispositif opérant par voie de flamme pour la fabrication d'un gaz de synthèse utilisable par exemple pour préparer de l'ammoniac, ou pour la fabrication d'un gaz réducteur, en particulier pour la sidérurgie.

La production idéale de gaz pour la synthèse de l'ammoniac s'effectue suivant la réaction globale suivante :

$$C_xH_y + x/2.O_2 + xH_2O \rightarrow xCO_2 + (2x+y)/2.H_2$$

Une première méthode pour produire du gaz de synthèse avec un bon rendement énergétique consiste à associer un reformage primaire avec un reformage secondaire.

En reformage primaire, on introduit, dans un réacteur comportant un catalyseur, un fort excès de vapeur (rapport molaire $H_2O/C > 2$) dont l'énergie est récupérée après le reformage secondaire.

Dans le reformage (catalytique) secondaire, avec une introduction d'air, on brûle partiellement les effluents du reformage primaire.

Une deuxième méthode pour produire du gaz de synthèse, consiste à brûler dans un réacteur un combustible en atmosphère présentant un défaut d'oxygène.

La combustion d'hydrocarbures, tels que le méthane provenant généralement du gaz naturel, en atmosphère présentant un défaut d'oxygène conduit à la formation de monoxyde de carbone (CO), d'hydrogène ($H_2$) qui sont les constituants du gaz de synthèse, mais également de dioxyde de carbone ($CO_2$), d'eau ($H_2O$) et bien souvent de suie (C).

La suie apparait notamment lorsque le défaut d'oxygene est trop important. Cependant, comme le rendement en hydrogène potentiel croit en première approximation avec la température de combustion et le défaut d'air ou d'oxygène, l'accroissement du rendement en hydrogéne s'accompagne de formation de suie. La température de combustion varie notamment en fonction de la température de préchauffage du combustible et du comburant.

Aussi, comme cette suie colmate les appareils de production, ce qui n'est pas souhaité, on peut introduire dans le réacteur de la vapeur d'eau pour empêcher la formation de suie. On peut aussi laver les effluents pour retirer la suie formée. Dans ces deux cas, l'investissement matériel nécessaire est très élevé.

Par hydrogène potentiel, on entend les quantités d'hydrogène ($H_2$) et de monoxyde de carbone (CO) qui sont produites par la combustion. Le monoxyde de carbone (CO) est transformable en hydrogène par "shift conversion".

La demande de brevet français FR-2.608.581 décrit un procédé et un dispositif opérant par voie de flamme pour la fabrication de gaz de synthèse. Ce procédé et le fonctionnement du dispositif selon cette invention, qui évite la présence de suie à la sortie du réacteur, consiste à faire déposer la suie formée sur des parois plus ou moins déflectrices, situées dans le courant de gaz brûlés (effluents), puis à oxyder cette suie par une addition de comburant à travers les parois qui sont poreuses.

Un objet de la présente invention est d'abaisser la quantité de suie potentielle formée par la combustion de manière à réduire la consommation de vapeur d'eau, donc l'investissement nécessaire.

L'invention propose un dispositif de fabrication de gaz de synthèse par combustion, en défaut de comburant, d'un combustible hydrocarboné par un comburant gazeux, le dispositif comportant des moyens primaires d'injection produisant un jet de combustible et d'une partie du comburant dans une chambre de combustion d'un réacteur, le jet comportant un axe longitudinal et formant une flamme principale prenant naissance sensiblement au niveau des moyens primaires d'injection et produite par les moyens primaires et les moyens secondaires sont disposés au travers dudit jet à une distance axiale des moyens primaires au moins égale à la moitié du diamètre moyen de la chambre de combustion et de préférence comprise entre deux fois et cinq fois le diamètre moyen de la chambre de combustion.

Les moyens secondaires pourront être disposés au travers du jet à une distance des moyens primaires au moins egale à la moitié de la distance séparant les moyens primaires de l'extrémité de la flamme principale suivant ledit axe longitudinal.

Par diamètre moyen, on entend le terme : $2\sqrt{\text{section moyenne de la chambre}/\pi}$

La distance séparant les moyens secondaires des moyens primaires pourra être au moins égale aux deux tiers de la distance séparant les moyens primaires de L'extrémité de la flamme principale et de préférence au moins égale à la distance séparant les moyens primaires de l'extrémité de la flamme principale.

Les moyens primaires d'injection ou les moyens secondaires d'injection pourront introduire de la vapeur d'eau.

L'apport primaire de comburant, défini comme étant le nombre de môles d'oxygène contenu dans le comburant injecté par les moyens primaires, rapporté au nombre de môles de carbone contenues dans le combustible injecté par les moyens primaires, pourra être compris entre 0,2 et 0,8, et de préférence entre 0,3 et 0,50.

L'apport secondaire de comburant, défini comme étant le nombre de môles d'oxygène contenu dans le comburant injecté par les moyens secondaires rapporté au nombre de môles de carbone contenues dans le combustible injecté par les moyens primaires pourra être compris entre 0,1 et 0,8 et de préférence entre 0,1 à 0,5.

L'apport de comburant, défini comme étant le nombre de môles d'oxygène contenu dans le comburant injecté par les moyens primaires et les moyens secondaires rapporté au nombre de môles de carbone contenu dans le combustible injecté par les moyens primaires pourra être sensiblement inférieur à 0,8 et de préférence sensiblement inférieur à 0,6.

Dans ces définitions des apports d'oxygene, le nombre de moles d'oxygène ne comptabilise pas l'oxygène de la vapeur d'eau.

Les moyens secondaires pourront comporter des injecteurs de comburants situés dans un plan sensiblement perpendiculaire audit axe du jet, à des distances audit axe du jet égales.

Les moyens secondaires pourront comporter une succession d'injecteurs, desquels jaillit le comburant, et qui produisent au moins une flamme secondaire, et ces injecteurs pourront être adaptés à étaler la flamme secondaire.

L'invention propose en outre un procédé de fabrication de gaz de synthèse par combustion, en défaut de comburant, d'un combustible hydrocarboné par un comburant gazeux, le combustible et une partie du comburant étant injectés sous une forme de jet dans une chambre de combustion par des moyens primaires d'injection, le jet ayant un axe longitudinal et comportant une flamme principale prenant naissance sensiblement au niveau où débouchent les moyens primaires dans la chambre de combustion, un complément de comburant étant injecté par des moyens secondaires d'injection, le complément de comburant et le combustible formant au moins une flamme secondaire.

Ce procédé est notamment caractérisé en ce que l'on utilise des moyens secondaires d'injection adaptés à étaler ladite flamme secondaire suivant l'axe du jet, c'est-à-dire disposés de façon à injecter le complément de comburant dans ledit jet à une distance non nulle des moyens d'injection primaire, les moyens secondaires sont disposés au travers dudit jet à une distance axiale des moyens primaires au moins égale à la moitié du diamètre moyen de la chambre de combustion et de préférence comprise entre deux fois et cinq fois le diamètre moyen de la chambre de combustion.

On pourra utiliser le dispositif ou le procédé selon l'invention pour la fabrication de gaz de synthèse utilisable pour la fabrication de l'ammoniac ou pour la production de gaz réducteur.

On appelle flamme, la zone dans laquelle se trouvent des espèces chimiques fortement instables telles que des radicaux libres ($OH^-$, $H^-$, $CH_3^-$, $O^-$..) ou des ions ($CxHy^+$, $H^+$) ou des molécules ($CHO$, $CH_2O$...). Dans cette zone, il se produit des réactions fortement exothermiques.

L'invention sera bien comprise et ses avantages apparaitront clairement à la lecture de la description suivante illustrée par les figures annexées parmi lesquelles :

- les figures 1, 2 et 3 représentent en coupe différents modes de réalisation du dispositif selon l'invention,
- la figure 1 représente un dispositif ayant des moyens secondaires annulaires d'injection comportant des injecteurs circonférentiels et coplanaires,
- la figure 2 représente un dispositif ayant des moyens secondaires d'injection cylindriques disposés à différents niveaux d'une flamme principale, et
- la figure 3 représente un dispositif ayant des moyens secondaires d'injection centraux.

Les éléments identiques pour les trois figures sont référencées de la même manière.

La référence 1 est relative au corps d'un dispositif constitué de matériaux réfractaires entourés d'une enveloppe. Le dispositif ou réacteur pour la fabrication de gaz de synthèse est alimenté par des moyens primaires d'injection 2 de comburant et de combustible qui sont généralement situés dans la partie haute du réacteur. Le comburant arrive par une canalisation 3 et le combustible arrive par la canalisation 4 aux moyens primaires d'injection.

Les moyens primaires, lorsqu'ils fonctionnent seuls, produisent une flamme principale 5 dont le contour ou l'extrémité figure en pointillé.

Les moyens secondaires sont alimentés en comburant et éventuellement avec une partie de vapeur par la canalisation 7.

Lorsque les moyens secondaires d'injection 6 sont en fonctionnement avec les moyens primaires d'injection 2, la flamme a un contour référencé 8.

Les effluents de la combustion traversent ensuite une masse catalytique 9 retenue par une grille 10 avant de s'évacuer par la sortie 11. La masse catalytique 9 permet d'accélérer la conversion endothermique du méthane avec l'eau. Cette conversion répond à la réaction suivante :

$$CH_4 + H_2O \rightarrow 3H_2 + CO$$

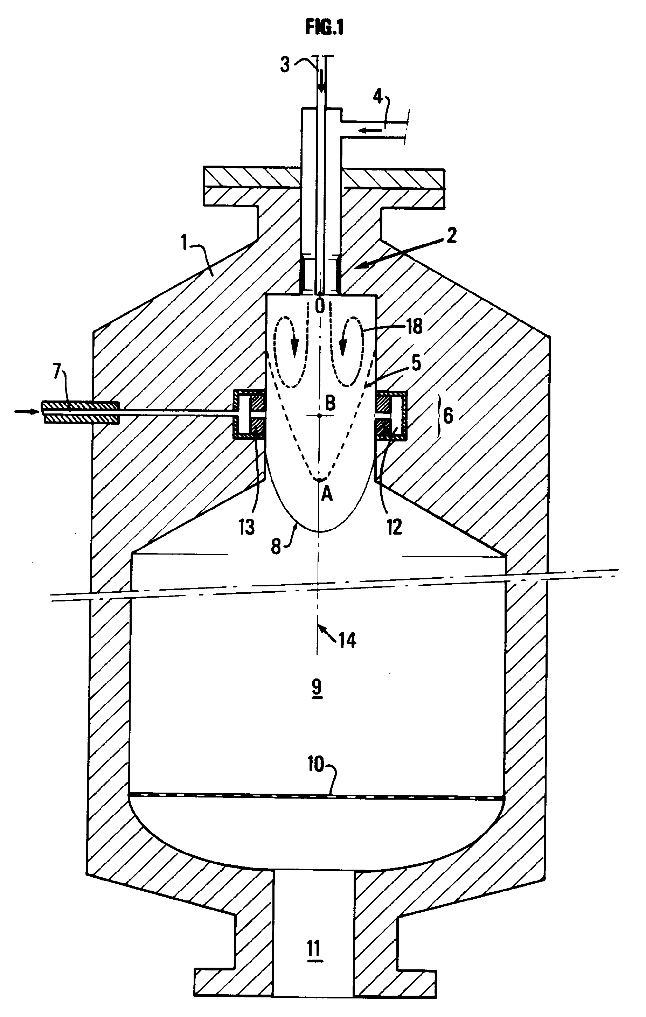

Sur la figure 1, les moyens secondaires d'injection 6 sont constitués par un chenal annulaire 12, alimenté en comburant et alimentant une bague d'injection 13 pourvue de trous radiaux par rapport à l'axe 14 du jet de gaz.

Les moyens secondaires sont disposés à une distance OB des moyens primaires sensiblement égale aux deux tiers de la distance OA séparant les moyens primaires de l'extrémité de la flamme principale 5.

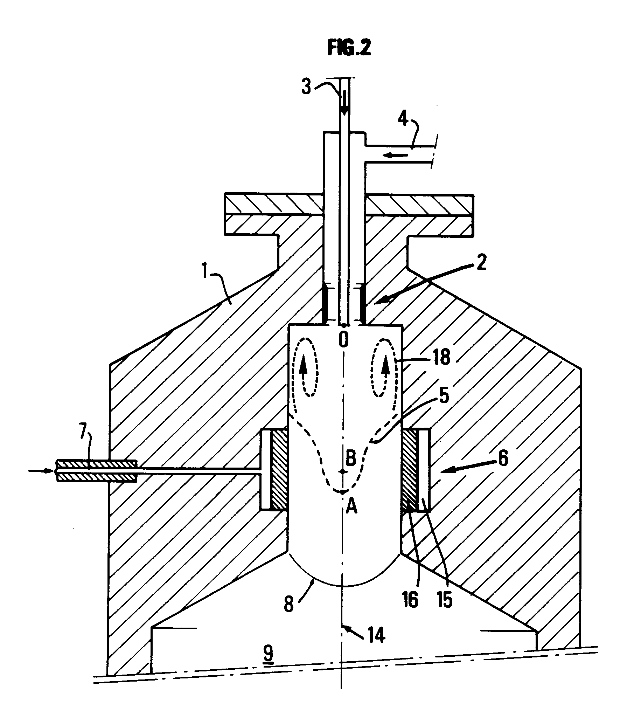

Sur la figure 2, les moyens secondaires d'injection 6 comportent un chenal cylindrique 15 et un cylindre de distribution 16 de comburant. Ce cylindre 16 est réalisé soit avec un matériau poreux, soit par une chemise perforée sur toute sa hauteur et sa circonférence. La hauteur et la position du cylindre 16 sont adaptés pour que le cylindre, soit sensiblement à la limite du bord de la flamme principale 5 et l'axe des moyens secondaires soit situé à une distance OB des moyens primaires comprise entre les deux tiers de la distance OA séparant les moyens primaires de l'extrémité de la flamme suivant l'axe du jet et la distance OA séparant les moyens primaires de l'extrémité de la flamme.

Le matériau poreux du cylindre 16 permet le passage du comburant ou éventuellement d'une partie de la vapeur en empêchant le passage des espèces instables produites par la combustion.

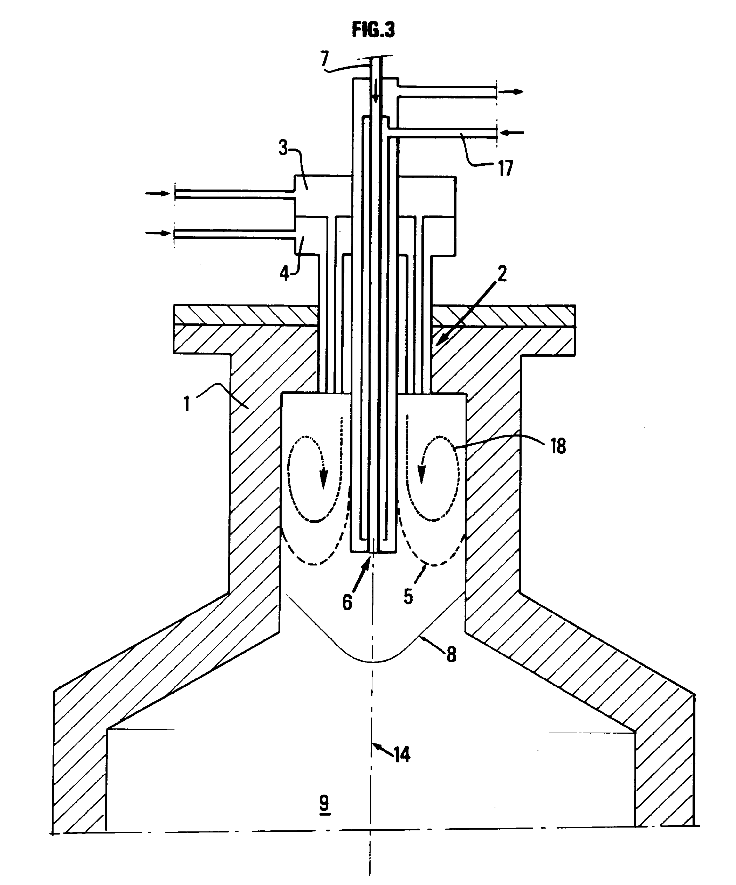

Sur la figure 3, les moyens secondaires d'injection sont centraux par rapport à l'axe du jet 14 et sont disposés au centre des moyens primaires annulaires 2.

Ces moyens secondaires sont refroidis par une circulation d'eau amenée par la canalisation 17. Pour se dispenser de la circulation d'eau, de tels moyens centraux peuvent être réalisés en matériau réfractaire comme une céramique à base de silice et d'alumine telle que la mullite, ou comme une céramique à base de carbure de silicium. Les moyens secondaires d'injection sont sensiblement disposés à la même hauteur que l'extrémité de la flamme principale 5.

L'addition de vapeur peut être faite soit par la canalisation de comburant, soit par la canalisation de combustible, soit les deux ensembles, soit encore par les moyens secondaires.

Le comburant peut être de l'air ou de l'air enrichi et peut être mélangé à de la vapeur, des gaz inertes ou du dioxyde de carbone.

Le combustible est un hydrocarbure, qui peut être mélangé à de la vapeur, des gaz inertes, du dioxyde de carbone ou de l'hydrogène. Le combustible préférentiellement utilisé est le méthane.

Les flèches 18 des figures 1, 2 et 3 indiquent les courants de recirculation de matières présentes dans la flamme.

Des essais ont été réalisés sous 40,5 bars sur une unité de faible taille (4 à 5 Nm3/h de gaz naturel) avec un rapport 02/C global de 0,6.

Sans étagement de la combustion, le rapport H2O/C requis pour éviter la suie est de 1,9. Avec un étagement, en introduisant au brûleur qu'un rapport 02/C de 0,46 le taux requis est de 1,2. Le complément d'oxydant, soit un rapport 02/C de 0,14 est introduit après, On économise ainsi plus de 30 % de vapeur.

## Revendications

1. Dispositif de fabrication de gaz de synthèse par combustion, en défaut de comburant, d'un combustible hydrocarboné par un comburant gazeux, ledit dispositif comportant des moyens primaires d'injection (2) produisant un jet de combustible et d'une partie du comburant dans une chambre de combustion d'un réacteur, ledit jet comportant un axe longitudinal et formant une flamme principale (5) prenant naissance sensiblement au niveau où débouchent les moyens primaires d'injection dans la chambre et s'étendant le long dudit axe longitudinal, ledit dispositif comportant en outre des moyens secondaires d'injection (6) d'un complément de comburant, caractérisé en ce que lesdits moyens secondaires d'injection (6) sont disposés de façon à injecter le complément de comburant dans ledit jet à une distance non nulle desdits moyens primaires d'injection (2), et en ce que lesdits moyens secondaires (6) sont disposés au travers dudit jet à une distance axiale des moyens primaires au moins égale à la moitié du diamètre moyen de la chambre de combustion et de préférence comprise entre deux fois et cinq fois le diamètre moyen de la chambre de combustion.

2. Dispositif selon la revendication 1, caractérisé en ce que les moyens secondaires comportent des injecteurs de comburants situés dans un plan perpendiculaire audit axe dudit jet, à des distances audit axe du jet égales.

3. Dispositif selon l'une des revendications 1 ou 2, caractérisé en ce que les moyens secondaires comportent une succession d'injecteurs desquels jaillit le comburant et qui produisent au moins une flamme secondaire, et en ce que lesdits injecteurs sont adaptés à étaler la flamme secondaire.

4. Procédé de fabrication de gaz de synthèse par combustion, en défaut de comburant, d'un combustible hydrocarboné par un comburant gazeux, le combustible et une partie du comburant étant injectés sous une forme de jet dans une chambre de combustion par des moyens primaires d'injection (2), ledit jet ayant un axe longitidunal et formant une flamme principale (5) prenant naissance sensiblement au niveau où débouchent lesdits moyens primaires dans la chambre de combustion, un complément de comburant étant injecté par des moyens secondaires d'injection, le complément de comburant et le combustible formant au moins une flamme secondaire, caractérisé en ce que l'on utilise des moyens secondaires d'injection adaptés à étaler Ladite flamme secondaire suivant l'axe du jet, c'est-à-dire disposés de façon à injecter le complément de comburant dans ledit jet à une distance non nulle des moyens d'injection primaire, lesdits moyens secondaires (6) étant disposés au travers dudit jet à une distance axiale des moyens primaires au moins égale à la moitié du diamètre moyen de la chambre de combustion et de préférence comprise entre deux fois et cinq fois le diamètre moyen de la chambre de combustion.

**5.** Procédé selon la revendication 4, caractérisé en ce que lesdits moyens secondaires (6) sont disposés au travers dudit jet à une distance (OB) des moyens primaires au moins égale à la moitié de la distance (OA) séparant les moyens primaires (2) de l'extrémité de la flamme principale suivant ledit axe longitudinal.

**6.** Procédé selon l'une des revendications 4 ou 5, caractérisé en ce que la distance séparant les moyens secondaires (6) des moyens primaires (2) est au moins égale aux deux tiers de la distance séparant les moyens primaires de l'extrémité de la flamme principale et de préférence au moins égale à la distance séparant les moyens primaires de l'extrémité de la flamme principale.

**7.** Procédé selon l'une des revendications 4 à 6, caractérisé en ce que les moyens primaires d'injection (2) ou les moyens secondaires d'injection (6) introduisent de la vapeur d'eau.

**8.** Procédé selon l'une quelconque des revendications 4 à 7, caractérisé en ce que l'apport primaire de comburant, défini comme étant le nombre de môles d'oxygène contenues dans le comburant injecté par les moyens primaires rapporté au nombre de môles de carbone contenues dans le combustible injecté par les moyens primaires est compris entre 0,2 et 0,8, et de préférence entre 0,3 et 0,50.

**9.** Procédé selon l'une des revendications 7 ou 8, caractérisé en ce que l'apport secondaire de comburant, défini comme étant le nombre de moles d'oxygène contenu dans le comburant injecté par les moyens secondaires rapporté au nombre de moles de carbone contenu dans le combustible injecté par les moyens primaires est compris entre 0,1 et 0,8.

**10.** Procédé selon l'une des revendications 7 à 9, caractérisé en ce que l'apport de comburant, défini comme étant le nombre de moles d'oxygène contenu dans le comburant injecté par les moyens primaires et les moyens secondaires rapporté au nombre de moles de carbone contenu dans le combustible injecté par les moyens primaires est sensiblement inférieur à 0,8 et de préférence sensiblement inférieur à 0,6.

**11.** Application du dispositif selon l'une des revendications 1 à 3, ou du procédé selon l'une des revendications 4 à 10, à la fabrication de gaz de synthèse utilisables pour la fabrication de l'ammoniac ou la production de gaz réducteur.

**Patentansprüche**

**1.** Vorrichtung zur Herstellung von Synthesegas durch Verbrennung, mit Unterschuß an dem die Verbrennung bewirkenden Mittel bzw. Sauerstoffträgereines kohlenwasserstoffhaltigen Brennstoffs durch eine gasförmiges die Verbrennung bewirkendes Mittel, wobei die Vorrichtung primäre Injektionsmittel (2) umfasst, die einen Brennstoffstrahl erzeugen, sowie einen Teil des Sauerstoffträgers in einer Verbrennungskammer eines Reaktors, wobei dieser Strahl eine Längsachse umfasst und eine Hauptflamme (5) bildet, die im wesentlichen an der Stelle ihren Ursprung nimmt, wo die primären Injektionsmittel in die Brennkammer münden und sich längs dieser Längsachse erstreckt, wobei die Vorrichtung im übrigen sekundäre Injektionsmittel (6) für ein Sauerstoffträgerkomplement umfassen, dadurch gekennzeichnet, daß diese sekundären Injektionsmittel (6) derart angeordnet sind, daß sie das Sauerstoffträgerkomplement in diesen Strahl unter einer Entfernung ungleich Null dieser primären Injektionsmittel (2) injizieren und daß diese sekundären Mittel (6) quer zu diesem Strahl unter einem Axialabstand von diesen Primärmitteln angeordnet sind, der wenigstens gleich der Hälfte des mittleren Durchmessers der Verbrennungskammer ist und vorzugsweise zwischen dem zweifachen und fünffachen des mittleren Durchmessers der Verbrennungskammer liegt.

**2.** Vorrichtung nach Anspruch 1, dadurch gekennzeichnet, daß diese Sekundärmittel Sauerstoffträgerinjektoren umfassen, die in einer Ebene senkrecht zu dieser Achse dieses Strahls unter gleichen Entfernungen zu dieser Achse des Strahls angeordnet sind.

**3.** Vorrichtung nach Anspruch 1 oder 2, dadurch gekennzeichnet, daß die sekundären Mittel eine Aufeinanderfolge von Injektoren umfassen, aus denen der Sauerstoffträger strömt, und die wenigstens eine Sekundärflamme erzeugen und daß diese Injektoren so ausgelegt sind, daß sie die Sekundärflamme verbreitern.

**4.** Verfahren zur Herstellung von Synthesegas durch Verbrennung mit Sauerstoffträger-Unterschuß, eines kohlenwasserstoffhaltigen Brennstoffs durch ein gasförmiges die Verbrennung bewirkendes Mittel bzw. Sauerstoffträger, wobei der Brennstoff und ein Teil des Sauerstoffträgers in einer Form von Strahl in eine Brennkammer durch mehrere Injektionsmittel (2) injiziert werden, wobei dieser Strahl eine Längsachse hat und eine Hauptflamme (5) bildet, die ihren Ursprung im wesentlichen an der Stelle nimmt, wo diese Primärmittel in die Brennkammer münden, wobei ein Sauerstoffträgerkompliment über sekundäre Injektionsmittel injiziert wird, wobei das Sauerstoffträgerkompliment und der Brennstoff wenigstens eine Sekundärflamme bilden, dadurch gekennzeichnet, daß man sekundäre Injektionsmittel verwendet, die so ausgelegt sind, daß sie diese Sekundärflamme gemäß der Achse des Strahls verbreitern, d.h., daß sie derart angeordnet sind, daß sie das Sauerstoffträgerkompliment in diesen Strahl unter einer Entfernung ungleich 0 von den Mitteln der Primärinjektion injizieren, wobei die Sekundärmittel (6) quer zu diesem Strahl unter einer Axialentfernung der Primärmittel angeordnet sind, die wenigstens gleich der Hälfte des mittleren Durchmessers der Brennkammer ist und vorzugsweise zwischen dem zweifachen und dem fünffachen des mittleren Durchmessers der Brennkammer liegt.

5. Verfahren nach Anspruch 4, dadurch gekennzeichnet, daß dieses Sekundärmittel (6) quer zu diesem Strahl unter einer Entfernung OB der Primärmittel angeordnet sind, die wenigstens gleich der Hälfte der Entfernung (OA) ist, welche die Primärmittel (2) vom Ende der Hauptflamme längs dieser Longitudinalachse trennen.

6. Verfahren nach einem der Ansprüche 4 oder 5, dadurch gekennzeichnet, daß die die Sekundärmittel (6) von den Primärmitteln (2) trennende Entfernung wenigstens gleich Zweidritteln der Entfernung ist, welche die Primärmittel vom Ende der Hauptflamme trennen und vorteilhaft wenigstens gleich der Entfernung ist, welche die Primärmittel vom Ende der Hauptflamme trennen.

7. Verfahren nach einem der Ansprüche 4 - 6, dadurch gekennzeichnet, daß die primären Injektionsmittel (2) oder die sekundären Injektionsmittel (6) Wasserdampf einführen.

8. Verfahren nach einem der Ansprüche 4 - 7, dadurch gekennzeichnet, daß der primäre Sauerstoffträgerzusatz, definiert als die Anzahl von Sauerstoffmolen, die im Sauerstoffträger enthalten sind, welche durch die Primärmittel injiziert wurde, bezogen auf die Anzahl von Kohlenstoffmolen, die im durch die Primärmittel injizierten Brennstoff enthalten sind, zwischen 0,2 und 0,8 und vorzugsweise zwischen 0,3 und 0,50 umfasst.

9. Verfahren nach einem der Ansprüche 7 oder 8, dadurch gekennzeichnet, daß der Sekundärzusatz an Sauerstoffträger, definiert als die Anzahl von Molen Sauerstoff, die im durch die Sekundärmittel injizierten Sauerstoffträger enthalten ist, bezogen auf die Anzahl von Molenkohlenstoff, der im durch die Sekundärmittel injizierten Brennstoff enthalten ist, zwischen 0,1 und 0,8 liegt.

10. Verfahren nach einem der Ansprüche 7 - 9, dadurch gekennzeichnet, daß der Zusatz an Sauerstoffträger, definiert als die Anzahl von Molen Sauerstoff durch die Primärmittel und die Sekundärmittel injizierten Sauerstoffträger enthalten ist, bezogen auf die Anzahl von Molenkohlenstoff, die in dem durch die Primärmittel injizierten Brennstoff enthalten ist, im wesentlichen kleiner als 0,8 und vorzugsweise im wesentlichen kleiner als 0,6 ist.

11. Anwendung der Vorrichtung nach einem der Ansprüche 1 - 3 oder des Verfahrens nach einem der Ansprüche 4 - 10 auf die Herstellung von Synthesegas, wie sie für die Herstellung von Amoniak oder die Produktion von Reduktionsgas verwendbar sind.

## Claims

1. A device for producing a synthesizing gas by burning, under conditions of deficient oxidant, a hydrocarbon combustion fuel using a gaseous oxidant, the device having primary injection means (2) producing a jet of combustible material and a part of the oxidant in a combustion chamber in a reactor, the jet having a longitudinal axis and forming a principal flame (5) originating substantially at the level at which the primary injection means have their inlet into the chamber and extending along the length of the longitudinal axis, the device also having secondary means (6) for injecting additional oxidant, characterised in that the secondary injection means (6) are arranged in such a way as to inject the additional oxidant into the jet at a distance from the primary injection means (2) and in that the secondary means (6) are located across the jet at an axial distance from the primary means equal to at least half the mean diameter of the combustion chamber and preferably in the range of between two and five times the mean diameter of the combustion chamber.

2. A device in accordance with claim 1, characterised in that the secondary means have oxidant injectors located in a plane perpendicular to the axis of the jet at equal distances from the jet.

3. A device in accordance with one of claims 1 or 2, characterised in that the secondary means have a series of injectors which discharge the oxidant and which produce at least one secondary flame and in that the injectors are designed to extend the secondary flame.

4. A process for producing synthesizing gas by burning, under conditions of deficient oxidant, a hydrocarbon fuel using a gaseous oxidant, the combustible material and a part of the oxidant being injected in the form of a jet into a combustion chamber by primary injection means (2), the jet having a longitudinal axis and forming a principal flame (5) originating substantially at the level at which the primary means have their inlet into the combustion chamber, additional oxidant being injected by secondary injection means, the additional oxidant and the combustible material forming at least one secondary flame, characterised in that secondary injection means designed to extend the secondary flame along the axis of the jet are used, i.e. they are arranged in such a way as to inject the additional oxidant into the jet at a distance from the primary means, the secondary means (6) being located across the jet at an axial distance from the primary means at least equal to half of the mean diameter of the combustion chamber and preferably ranging between two and five times the diameter of the combustion chamber.

5. A process in accordance with claim 4, characterised in that the secondary means (6) are located across the jet at a distance (OB) from the primary means at least equal to half the distance (OA) between the primary means (2) and the end of the principal flame along the longitudinal axis.

6. A process in accordance with one of claims 4 or 5, characterised in that the distance between the secondary means (6) and the primary means (2) is at least equal to two thirds of the distance between the primary means and the end of the principal flame and preferably at least equal to the distance between the primary means and the end of the principal flame.

7. A process in accordance with claims 4 to 6, characterised in that the primary injection means (2) or the secondary injection means (6) introduce steam.

8. A process in accordance with one of claims 4 to 7, characterised in that the primary input of oxidant, defined as being the number of oxygen moles contained in the oxidant injected by the primary means relative to the number of carbon moles in the combustible material injected by the primary means ranges between 0.2 and 0.8 and preferably between 0.3 and 0.50.

9. A process in accordance with one of claims 7 or 8, characterised in that the secondary input of oxidant, defined as being the number of oxygen moles contained in the oxidant injected by the secondary means relative to the number of carbon moles contained in the combustible material injected by the primary means ranges between 0.1 and 0.8.

10. A process in accordance with one of claims 7 to 9, characterised in that the oxidant supply, defined as being the number of oxygen moles contained in the oxidant injected by the primary means and the secondary means relative to the number of carbon moles contained in the fuel injected by the primary means is substantially less than 0.8 and preferably substantially less than 0.6.

11. Application of the device in accordance with one of claims 1 to 3 or of the process in accordance with one of claims 4 to 10 to the production of synthesizing gas for use in the manufacture of ammonia or reducing gas.

**FIG.1**

**FIG.2**

FIG.3